# EUROPÄISCHE PATENTSCHRIFT

(11) **EP 1 887 245 B1**
(45) Veröffentlichungstag und Bekanntmachung des Hinweises auf die Patenterteilung: **02.03.2011**
(21) Anmeldenummer: 07012125.6
(22) Anmeldetag: 21.06.2007
(51) Int. Cl.: F16D 69/04

(54) **Bremsbelagträger für Scheibenbremsbeläge in Schienenfahrzeugen**
Brake pad mounting for disc brake pads in rail vehicles
Support de plaquette de frein pour garnitures de freins à disque dans des véhicules sur rail

(30) Priorität: 12.08.2006 DE 102006037802
(43) Veröffentlichungstag der Anmeldung: 13.02.2008
(73) Patentinhaber: Bremskerl-Reibbelagwerke Emmerling GmbH & Co. KG, 31629 Estorf (DE)
(72) Erfinder: Gramatke, Dipl.-Ing. Rainhard, 31609 Balge (DE); Hering, Dipl.-Ing. Werner, 30916 Isernhagen (DE)
(74) Vertreter: Sroka, Peter-Christian

(56) Entgegenhaltungen:
- EP-A- 0 007 746
- DE-U1- 9 001 661
- FR-A- 1 510 268
- US-A- 5 388 675

## Beschreibung

Die Erfindung betrifft einen Bremsbelagträger gemäß dem Oberbegriff des Patentanspruchs 1.

Ein derartiger Bremsbelagträger ist beschrieben in der FR 1 510 268 A.

In der US 5,388,675 A ist ein Bremsbelagträger beschrieben, der eine primäre Trägerplatte und eine daran mechanisch befestigte sekundäre Trägerplatte aufweist. Die primäre Trägerplatte ist zum Einpressen von Bremsbelagmaterial über ihre Länge mit einer langgestreckten Erhöhung versehen, die einen kanalförmigen, taubenscbwanzförmigen (dovetail-shaped) Querschnitt im wesentlichen in Form eines aus der Ebene der Trägerplatte herausgedrückten Trapezes hat, dessen kürzere Seite in der Ebene der primären Trägerplatte liegt. Die sekundäre Trägerplatte ist mit einer langgestreckten Aussparung versehen, an deren Enden sich oberhalb der Grundfläche dieser sekundären Trägerplatte liegende Sitzflächen befinden, die zum Abstützen der primären Trägerplatte in deren trapezförmige Erhöhung ragen.

Der Erfindung liegt die Aufgabe zugrunde, einen verbesserten Bremsbelagträger zu schaffen, bei dem die Verankerung zwischen dem Bremsbelagträger und dem Brems- bzw. Reibbelagmaterial verbessert ist.

Zur Lösung dieser Aufgabe wird für einen Bremsbelagträger für Scheibenbremsbeläge in Schienenfahrzeugen, bestehend aus einer an einem Belaghalter befestigbaren, metallischen Trägerplatte, die zum Einpressen von Bremsbelagmaterial zumindest über einen Teil ihrer Länge mit einer langgestreckten Erhöhung versehen ist, die einen kanalförmigen Querschnitt im wesentlichen in Form eines aus der Ebene der Trägerplatte herausgedrückten Trapezes hat, dessen kürzere Seite in der Ebene der Trägerplatte liegt, wobei die die längere Trapezseite bildende Materialfläche mindestens eine Aussparung aufweist, die durch seitliche, in Richtung der kürzeren Trapezseite abgebogene Randstreifen begrenzt ist, die senkrecht zur Längsachse der Erhöhung verlaufen, erfindungsgemäß vorgeschlagen, dass die Erhöhung im Bereich ihrer Enden durch senkrecht zu ihrer Längsachse verlaufende, aus dem Trägerplattenmaterial abgebogene Randstreifen begrenzt ist. Die Gesamtheit dieser Randstreifen führt zu einer verbesserten Verklammerung zwischen der Trägerplatte und dem Brems- bzw. **Reibbelagmaterial** und damit zu einer sicheren Verbindung des Brems- bzw. Reibbelagmaterials mit der Träger- bzw. Druckplatte.

Gemäß einer weiteren bevorzugten Ausführungsform sind in der Trägerplatte seitlich von der Erhöhung Durchbrüche zum Einpressen von Bremsmaterial angebracht, um den Verklammerungseffekt zwischen Träger- bzw. Druckplatte und Reib- bzw. Bremsbelagmaterial zu erhöhen

Die Erfindung wird im folgenden anhand der Zeichnung näher beschrieben.
Figur 1 zeigt eine Draufsicht auf die erfindungsgemäße Trägerplatte;
Figur 2 zeigt eine Seitenansicht in Richtung des Pfeiles II;
Figur 3 zeigt eine Schnittansicht in Richtung der Pfeile III-III.

Der erfindungsgemäße Bremsbelagträger hat im wesentlichen die Form einer länglichen Platte 1, die an ihrem einen Ende 1.1 im wesentlichen geradlinig ausgebildet und an ihrem anderen Ende 1.2 im wesentlichen die Form einer abgerundeten Spitze hat.

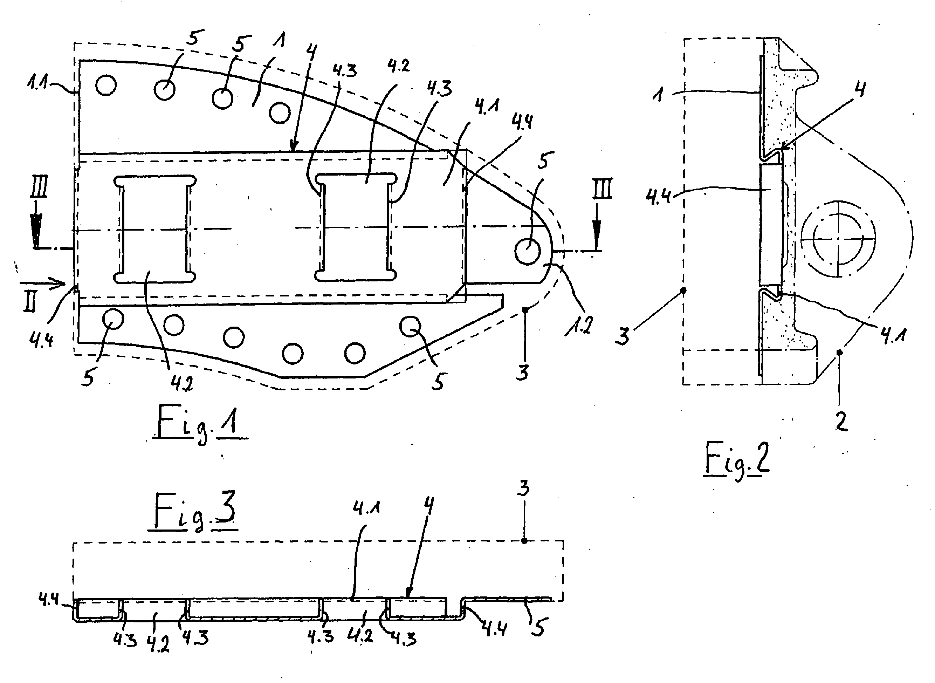

Gemäß Figur 2 ist die Trägerplatte 1 an einem Belaghalter 2 befestigt. Auf der anderen Seite der Trägerplatte 1 ist der Brems- bzw. Reibbelag 3 im wesentlichen ganzflächig mit der Trägerplatte 1 verbunden.

Die Trägerplatte 1 ist mit einer zumindest über einen Teil ihrer Länge verlaufenden, langgestreckten Erhöhung 4 versehen. Die Erhöhung 4 hat einen kanalförmigen Querschnitt, im wesentlichen in Form eines aus der Ebene der Trägerplatte 1 herausgedrückten Trapezes, vorzugsweise gleichschenkligen Trapezes, dessen kürzere Seite in der Ebene der Trägerplatte 1 liegt. Die trapezförmige Erhöhung 4 beginnt an der einen Seite an dem im wesentlichen geradlinigen Ende 1.1 der Trägerplatte 1 und endet mit Abstand von dem anderen, als abgerundete Spitze 1.2 ausgebildeten Ende der Trägerplatte.

Die die längere Trapezseite bildende Materialfläche 4.1 ist mit mindestens einer Aussparung 4.2 versehen, die durch seitliche, in Richtung der kürzeren Trapezseite abgebogene Randstreifen 4.3 des Trägerplattenmaterials begrenzt ist. Diese Randstreifen 4.3 verlaufen senkrecht zur Längsrichtung der kanalförmigen Erhöhung 4 und bewirken eine zuverlässige Verklammerung zwischen der Trägerplatte und dem Brems- bzw. Reibbelagmaterial. Die trapezfömige Erhöhung 4 ist im Bereich ihrer Enden durch senkrecht zu ihrer Längsachse verlaufende, aus dem Trägerplattenmaterial abgebogene Randstreifen 4.4 versehen. In der Trägerplatte 1 sind seitlich von der trapezförmigen Erhöhung 4 und gegebenenfalls auch zusätzlich in der Verlängerung der Erhöhung 4 Durchbrüche 5 zum Ein- bzw. Durchpressen von Bremsbelag-matenal angebracht.

Durch die Erfindung wird erreicht, dass der Brems- bzw. Reibbelag 3 auf seiner gesamten Reibfläche gleichmäßig beansprucht und somit eine erhöhte Bremswirkung erreicht wird und der Verschleiß gleichmäßiger ist. Infolge der ganzflächigen Abstützung des Reibbelags bzw. Bremsbelags 3 wird weiterhin erreicht, dass der Belag 3 an der Spitze und an den Seiten nicht bricht oder Risse bildet, wie es bei herkömmlichen Bremsbelagträgem der Fall sein kann.

## Patentansprüche

1. Bremsbelagträger für Scheibenbremsbeläge in Schienenfahrzeugen, bestehend aus einer an einem Belaghalter befestigbaren, metallischen Trägerplatte (1), die zum Einpressen von Bremsbelagmaterial (3) zumindest über einen Teil ihrer Länge mit einer langgestreckten Erhöhung (4) versehen ist, die einen kanalförmigen Querschnitt im wesentlichen in Form eines aus der Ebene der Trägerplatte (1) herausgedrückten Trapezes hat, dessen kürzere Seite in der Ebene der Trägerplatte liegt, wobei die die längere Trapezseite bildende Materialfläche (4.1) mindestens eine Aussparung (4.2) aufweist, die durch seitlche, in Richtung der kürzeren Trapezseite abgebogene Randstreifen (4.3) begrenzt ist, die senkrecht zur Längsachse der Erhöhung (4) verlaufen, **dadurch gekennzeichnet, dass** die Erhöhung (4) im Bereich ihrer Enden durch senkrecht zu ihrer Längsachse verlaufende, aus dem Trägerplattenmaterial abgebogene Randstreifen (4.4) begrenzt ist.

2. Bremsbelagträger nach Anspruch 1, **dadurch gekennzeichnet, dass** in die Trägerplatte (1) seitlich von der Erhöhung (4) Durchbrüche (5) zum Einpressen von Bremsmaterial angebracht sind.

3. Bremsbelagträger nach einem der Ansprüche oder 2, **dadurch gekennzeichnet, dass** in der Trägerplatte (1) in der Verlängerung der kanalförmigen Erhöhung (4) mindestens ein weiterer Durchbruch (5) zum Ein- bzw. Durchpressen von Bremsbelagmateral angebracht ist.

## Claims

1. A brake lining back plate for rail vehicle disk brake linings which consists of a metallic back plate (1) that can be attached to a lining back plate provided over at least part of its length with an extended projection for the pressing-in of lining material (3) and has a channel-shaped cross section substantially of trapezoidal shape that is pressed out from the level of the back plate, the shorter end of which is at the level of the back plate, where the material surface (4.1) forming the longer side of the trapezium has at least one breakout (4.2) which is bordered by edging strips (4.3) bent away in the direction of the shorter side of the trapezium that extend perpendicularly to the longitudinal axis of the projection (4), **characterised in that** the projection (4) in the area of its ends is bordered by edging strips (4.4) extending perpendicularly to their longitudinal axis which are bent away from the back plate material.

2. Brake lining back plate in accordance with Claim 1, **characterised in that** laterally to the projection (4) in the back plate (1), breakouts (5) are provided for pressing-in braking material.

3. Brake Lining back plate in accordance with one of claims 1 or 2, **characterised in that** in the back plate (1) extension of the channel-shaped projection (4) at least one further breakout (5) for pressing-in or pressing through brake lining material is provided.

## Revendications

1. Support de garniture de frein pour plaquettes de frein à disque de véhicules ferroviaires, composé d'une plaque support (1) métallique rattachée à une plaque de garniture, de telle sorte que l'immobilisation du matériau composant ce frein (3) comporte, sur au moins une partie de sa longueur une section en saillie (4) de forme allongée, une section transversale sensiblement en forme de trapèze disposé dans la partie plane du plateau support (1), alors que le côté court se situe dans la partie plane du plateau support et alors que la surface plane (4.1) composant le côté long du trapèze comporte au moins un creux (4.1) qui, sur le plan latéral, est limité en direction du côté court du trapèze par le bord de la bande recourbée (4.3), qui se situe à la perpendiculaire de l'axe long de la partie en saillie, alors que la partie en saillie (4) à proximité des extrémités et se situant à la perpendiculaire de son axe long est limitée par le bord de la bande recourbée du plateau support.

2. Un support de garniture de frein, comme celui qui est décrit dans l'affirmation 1 si ce n'est que dans la plaque support (1), de part et d'autre de la partie en saillie (4), des trous (5) ont été percés pour bien fixer le matériau composant ce frein.

3. Un support de garniture de frein, comme celui qui est décrit dans l'affirmation 1 ou 2, si ce n'est que dans la plaque support (1), dans le prolongement de la partie en saillie de forme cylindrique (4), au moins un trou supplémentaire (5) a été percé pour bien fixer le matériau composant ce frein.
